# EUROPÄISCHE PATENTSCHRIFT

(11) **EP 0 659 606 B1**
(45) Veröffentlichungstag und Bekanntmachung des Hinweises auf die Patenterteilung: **18.06.1997**
(21) Anmeldenummer: 94118533.2
(22) Anmeldetag: 25.11.1994
(51) Int. Cl.: B60K 26/02, G05G 1/14

(54) **Gaspedaleinrichtung für ein Kraftfahrzeug**
Motor vehicle accelerator pedac arrangement
Disposition d'une pédale d'accélérateur pour automobiles

(30) Priorität: 21.12.1993 DE 4343681
(43) Veröffentlichungstag der Anmeldung: 28.06.1995
(73) Patentinhaber: Dr.Ing.h.c. F. Porsche Aktiengesellschaft, 70435 Stuttgart (DE)
(72) Erfinder: Baumann, Hans-Uwe, D-70437 Stuttgart (DE); Mertens, Carsten-Joerg, D-71134 Aidlingen (DE)

(56) Entgegenhaltungen:
- EP-A- 0 343 117
- FR-A- 952 829
- GB-A- 2 102 103
- US-A- 4 182 198
- US-A- 5 063 811

## Beschreibung

Die Erfindung bezieht sich auf eine Gaspedaleinrichtung nach dem Oberbegriff des Anspruchs 1.

Aus der EP-343 117 B1 ist eine Gaspedaleinrichtung für Fahrzeuge bekannt, die eine Pedalhalterung in Form eines Hohlkörpers aufweist, der zur Befestigung am Aufbau des Fahrzeugs ausgebildet ist. Der Hohlkörper besteht aus einem schalenförmigen Gehäuse, in dem die Einrichtung alleinig befestigt und an dem das Pedal schwenkbar gelagert ist. Über eine Deckelplatte wird das Gehäuse rückseitig abgeschlossen. Der Einbau in den Fahrzeugaufbau erfolgt durch eine Aufbauöffnung von der Rückseite her und eine Befestigung erfolgt über separate Schraubmittel.

Aufgabe der Erfindung ist es, eine Gaspedaleinrichtung für ein Kraftfahrzeug zu schaffen, die außerhalb des Fahrzeugs vormontierbar ist und die eine einfache Montage unabhängig von Bauteiltoleranzen der Karosserie gewährleistet.

Diese Aufgabe wird erfindungsgemäß durch die kennzeichnenden Merkmale des Anspruchs 1 gelöst. Weitere vorteilhafte Merkmale beinhalten die Unteransprüche.

Die mit der Erfindung hauptsächlich erzielten Vorteile bestehen darin, daß durch die Ausbildung der Pedalhalterung gemäß Anspruch 1 diese außerhalb des Fahrzeugs vormontierbar wird und eine vollständige Funktionsprüfung auch außerhalb des Fahrzeugs durchgeführt werden kann. Eine Montage im Fahrzeug erfolgt in einfacher Weise durch ein Einclipsen von Rasthakenleisten in entsprechende aufbauseitige Aufnahmen und mittels Zentrierdome, welche eine Lagefixierung gewährleisten und zudem Querkräfte übernehmen können.

Alle Bauteile der Stelleinrichtung befinden sich in dem von den Halbschalen der Gaspedaleinrichtung gebildeten Gehäuse. Dadurch sind enge Toleranzen der Bauteile zueinander möglich. Einstellungen von Gestänge, Anschlägen, eines Kick-Down-Schalters sowie eines Gaszugs usw. sind nicht mehr erforderlich.

Die Vormontage der Einrichtung erfolgt gemäß Anspruch 2 in der Weise, daß die Bauteile dieser Einrichtung in einer Halbschale auf entsprechenden Lagerstellen gehalten sind und die zweite Halbschale durch Aufsetzen dieser Einrichtung lagegenau festsetzt, wozu miteinander korrespondierende Positionierbolzen bzw. Hülsen dienen.

In das Gehäuse können entsprechend den Erfordernissen auch zusätzliche Einrichtungen wie eine Mitnahmemechanik sowie ein Seilzug für eine Tempomat-Stelleinrichtung mit integriert werden.

Damit die Aufnahme der einzelnen Bauteile der Einrichtung in einfacher Montageweise durchführbar wird, sind die entsprechenden Lagerbolzen an die Halbschalen aus Kunststoff angespritzt.

Das Gaspedal ist in angespritzten Lageraugen der Halbschalen über angespritzte Bolzen am Gaspedalfuß schwenkbar gelagert, wobei ein Festsetzen in den Halbschalen bei einem Zusammenstecken derselben erfolgt.

Gemäß Anspruch 4 ist das Gehäuse mit drei jeweils über eine Querwand abgetrennte Kammern versehen und in jeder Kammer sind Bauteile der Einrichtung gelagert, die teilweise miteinander in Wirkverbindung stehen, z.B. über einen Seilzug oder über eine Zugstange.

Zur bündigen Anordnung des aus den zwei Halbschalen gebildeten Gehäuses mit dem Fahrzeugboden oder einer Wand oder einem Teppich ist an beiden Halbschalen ein umlaufender Steg vorgesehen, der vorzugsweise den Teppich bzw. die Kante abdeckt.

Die Gaspedaleinrichtung ist sowohl für Heckmotorfahrzeuge, bei denen der Gaszug nach hinten austritt als auch für Frontfahrzeuge mit einem Gaszugaustritt nach vorn oben geeignet. Ebenso ist die Einrichtung für ein stehendes Gaspedal als auch für ein hängendes Gaspedal zu verwenden.

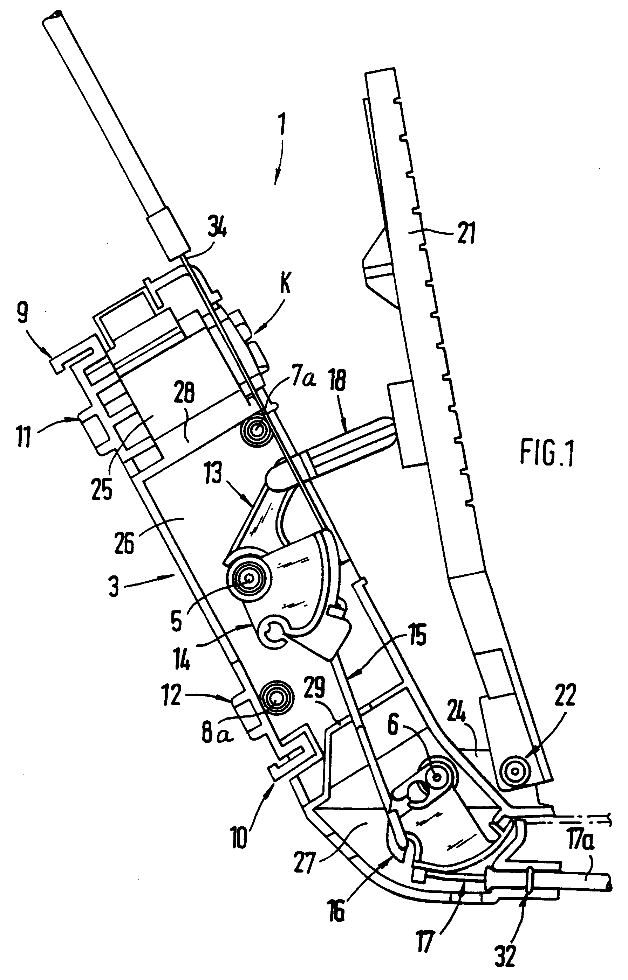

Ein Ausführungsbeispiel der Erfindung ist in der Zeichnung dargestellt und wird im folgenden näher beschrieben.
Es zeigen
- Fig. 1: eine Seitenansicht einer Gaspedaleinrichtung auf die gelagerten Bauteile der Einrichtung in einer Halbschale des Gehäuses gesehen,

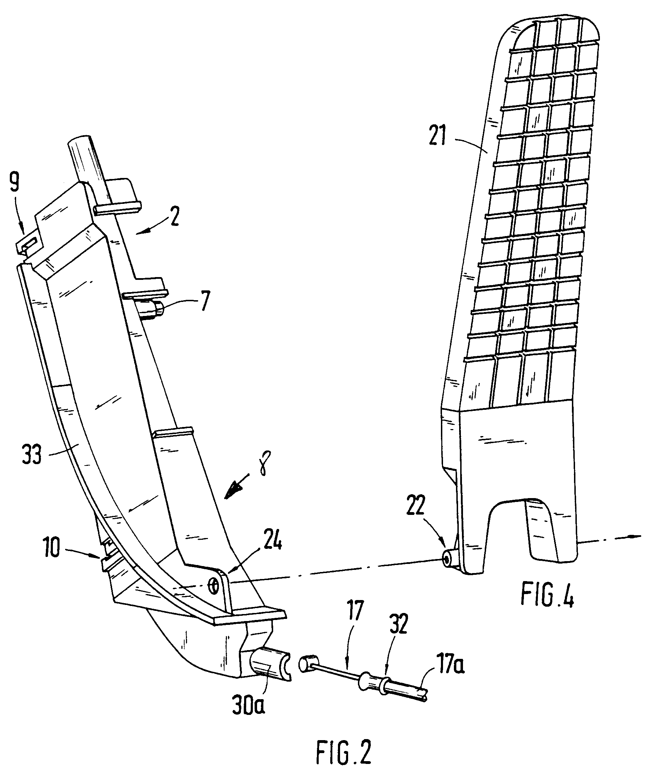

- Fig. 2: eine schaubildliche Darstellung der weiteren Halbschale des Gehäuses.

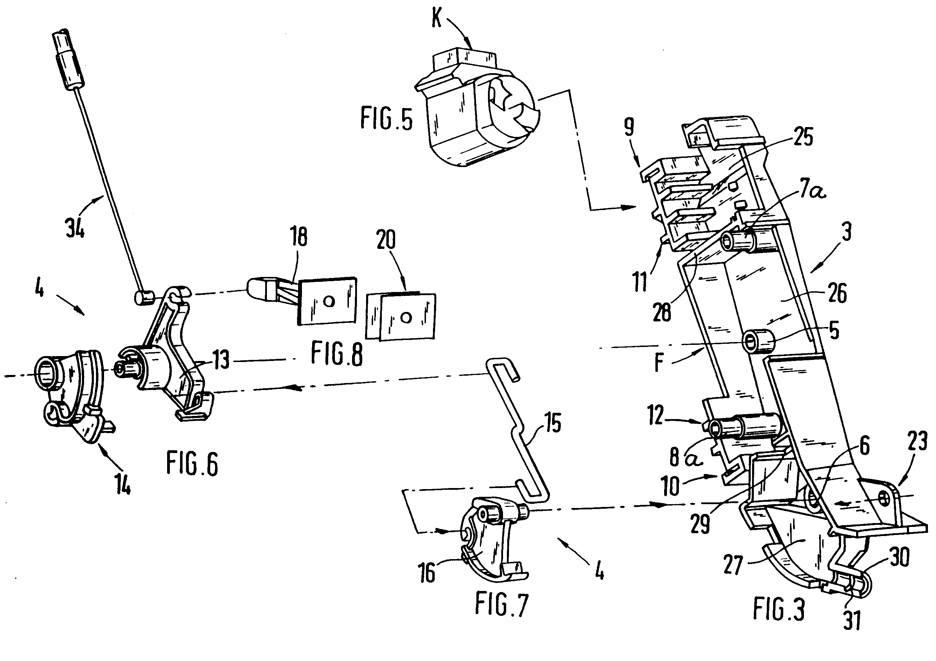

- Fig. 3: eine schaubildliche Darstellung der Halbschale gemäß Fig. 1,
- Fig. 4: eine schaubildliche Darstellung einer Gaspedalplatte,
- Fig. 5: eine schaubildliche Darstellung eines Kick-Down-Schalters,
- Fig. 6: eine Darstellung einer Mitnahmescheibe mit Umlenkhebel,
- Fig. 7: eine Umlenkscheibe der Einrichtung, und
- Fig. 8: eine Druckstange mit Federelement der Einrichtung.

Die Gaspedaleinrichtung 1 umfaßt im wesentlichen eine aus zwei Halbschalen 2, 3 zu einem geschlossenen länglichen Gehäuse zusammengesetzte Pedalhalterung. Die Halbschalen 2, 3 weisen zur Aufnahme einer Stelleinrichtung 4 angespritzte Lagerungen 5, 6 auf und sind zum Aufeinanderstecken mit Positionierbolzen 7, 8 (nicht gezeigt) an der Halbschale 3 versehen, die in entsprechende Hülsen 7a, 8a einsteckbar sind. Eine Verbindung der beiden Halbschalen erfolgt über Schraubmittel. Zum Festsetzen des Gehäuses an einer Aufbauwand bzw. zum Verbinden mit einem Fahrzeugboden dienen Clipselemente wie z.B. Leisten 9, 10 mit Rasthaken. Zur Lagefixierung und Kraftaufnahme des Gehäuses 3, 4 sind am Boden bzw. an der Unterfläche F der Halbschale 3, 4 Zentrierdome 11 und 12 angeformt.

Zur Montage der Stelleinrichtung 4 wird diese z.B. in der Halbschale 3 vollständig vormontiert. D.h., die mit einem Umlenkhebel 13 zusammengebaute Mitnehmerscheibe 14 und eingehängte Zugstange 15 wird auf der Lagerstelle 5 gehalten. Mit dem Umlenkhebel 13 ist eine Druckstange 18 verbunden, die unter Zwischenschaltung eines vorgespannten Federelements 20 in unmittelbarer Wirkverbindung zur Pedalplatte 21 steht. Die Umlenkscheibe 16 mit eingehängter Zugstange 15 und verbundenem Gaszug 17 wird auf der Lagerstelle 6 angeordnet.

Die Pedalplatte 21 wird mit zwei angespritzten seitlichen Bolzen 22 in Lageraugen 23, 24 der Halbschalen 2, 3 schwenkbar gelagert. Durch Aufsetzen der zweiten Halbschale 2 auf die erste Halbschale 3 und mittels einer Verschraubung wird die gesamte Stelleinrichtung 4 im Hohlraum des Gehäuses festgelegt.

Die Bauteile der Einrichtung 4 sind in verschiedenen Kammern 25, 26 und 27 angeordnet, die jeweils über Querwände 28, 29 getrennt zueinander sind. Diese Querwände dienen hauptsächlich zur Versteifung des Gehäuses. Damit die Gaspedaleinrichtung 1 universell einsetzbar für verschiedene Fahrzeuge ist, sind für zusätzliche Einrichtungen wie z.B. einem Kick-Down-Schalter K und z.B. für eine Mitnehmerscheibe 14 einer Tempomateinrichtung Aufnahmen geschaffen.

So ist der Kick-Down-Schalter K in der endseitigen oberen Kammer 25 und die Mitnehmerscheibe 14 zusammen mit dem Umlenkhebel 13 in der mittleren Kammer 26 angeordnet. In der endseitigen unteren Kammer 27 ist die Umlenkscheibe 16 auf der Lagerung 6 gehalten.

Zur Durchführung des Gaszuges 17 in die Kammer 27 und zum Festsetzen der Seilzughülse 17a ist an jeder Halbschale 2, 3 eine Halbhülse 30, 30a angespritzt, in der über eine Nut 31 ein Wulst 32 der Hülse 30 nach dem Zusammenstecken der beiden Halbschalen festgesetzt wird.

Die Halbschalen 2 und 3 weisen einen außerhalb des Gehäuses in Längsrichtung umlaufenden Steg 33 auf, welcher einer Bodenkontur folgt und der Steg den Teppich abdeckt.

Der in der Kammer 25 eingesetzte Kick-Down-Schalter K für Automatik-Fahrzeuge wird direkt durch die voll durchgetretene Gaspedalplatte 21 betätigt. Er bildet gleichzeitig auch einen Pedalweg-Endanschlag. Bei Fahrzeugen ohne Kick-Down-Schalter wird dieser durch einen einfachen Dummy als Endanschlag ersetzt.

Für Fahrzeuge mit einer Tempomat-Einrichtung wird die zusätzliche Mitnehmerscheibe 14 benötigt. Diese wird durch einen Seilzug 34 eines nicht gezeigten Stellmotors betätigt. Die Mitnehmerscheibe 14 greift Unter den Umlenkhebel 13 und nimmt diesen mit, sofern sie selbst betätigt wird. Bei einem normalen Gasgeben bleibt die Mitnehmerscheibe 14 in ihrer Position stehen.

Die Montage des aus den beiden Halbschalen 2 und 3 bestehenden Gehäuses mit integrierter Einrichtung 4 erfolgt über die angespritzten Rasthakenleisten 9 und 10, welche einer entsprechend korrespondierend ausgebildeten Leiste, Falz oder dergleichen des Fahrzeugbodens übergreifen. Mittels der Zentrierdome 11, 12, welche in Bohrungen oder Aufnahmen im Fahrzeugboden eingesteckt werden, ist das Gehäuse lagefixiert.

Die Verbindung der Bauteile untereinander, wie die Zugstange 15 mit dem Umlenkhebel 13 erfolgt über eine Klipsverbindung. Eine solche Verbindung besteht auch zwischen der Druckstange 18 und dem Umlenkhebel 13, wobei dieser eine Aufnahme aufweist, in die z.B. ein Querzapfen der Stange 18 eingeklemmt wird. Somit entfallen aufwendige Schraubverbindungen.

## Patentansprüche

1. Gaspedaleinrichtung für ein Kraftfahrzeug mit einer an einer Pedalhalterung in Form eines Gehäuses schwenkbar gelagerten Pedalplatte und einer mit der Pedalplatte verbundenen Stelleinrichtung, **dadurch gekennzeichnet,** daß die Pedalhalterung aus einem zwei Halbschalen (2, 3) umfassenden länglichen Gehäuse besteht, in dem auf innenseitig angeformten Lagerstellen (5, 6) Bauteile der Stelleinrichtung (4) gehalten sind und außenseitig der Halbschalen (2, 3) querverlaufende Rasthakenleisten (9, 10) und an einer dem Fahrzeugaufbau zugerichteten Unterfläche (F) der Halbschalen (2, 3) angeformte gemeinsame Zentrierdome (11, 12) zur Befestigung und Lagefixierung vorgesehen sind.

2. Einrichtung nach Anspruch 1, **dadurch gekennzeichnet,** daß die Bauteile der Stelleinrichtung (4) vormontiert auf den Lagerstellen (5, 6) einer Halbschale (2 oder 3) angeordnet sind und mittels der zweiten aufgesetzten Halbschale (2 oder 3) festsetzbar sind, wobei die Halbschalen (2, 3) über Positionierbolzen (7, 8) und mit diesen korrespondierenden Hülsen (7a, 8a) lagefixiert sind.

3. Einrichtung nach den Ansprüchen 1 oder 2, **dadurch gekennzeichnet,** daß das Gaspedal (21) über seitlich angeformte Bolzen (22) in außerhalb des Gehäuses an jeder Halbschale (2, 3) vorgesehenen Lageraugen (23, 24) verschwenkbar gehalten ist.

4. Einrichtung nach den Ansprüchen 1, 2 oder 3, **dadurch gekennzeichnet,** daß die zusammengesetzten Halbschalen (2, 3) Kammern (25, 26 und 27) bilden, wobei zwischen endseitigen Kammern (25 und 27), in einer mittleren Kammer (26) ein mit dem Pedal (21) über eine Druckstange (18) unmittelbar zusammenwirkendes Übertragungselement, bestehend aus einem Umlenkhebel (13) und einer wahlweise verwendeten Mitnehmerscheibe (14) auf der Lagerstelle (5) gehalten ist.

5. Einrichtung nach Anspruch 1 oder einem der vorhergehenden Ansprüche, **dadurch gekennzeichnet,** daß in der einen endseitigen oberen Kammer (25) ein Kick-Down-Schalter (K) zwischen Aufnahmen und in der weiteren endseitigen unteren Kammer (27) eine Umlenkscheibe (16) für einen eingehängten Gaszug (17) auf der weiteren Lagerstelle (6) angeordnet ist.

6. Einrichtung nach Anspruch 1 oder einem der vorhergehenden Ansprüche, **dadurch gekennzeichnet,** daß die Kammern (25 bis 27) über das Gehäuse versteifende Querwände (28, 29) teilweise voneinander abgetrennt sind und in den Querwänden Durchbrüche für einen Seilzug (34) einer Tempomat-Einrichtung und für eine die Bauteile (13 und 16) verbindende Zugstange (15) vorgesehen sind.

7. Einrichtung nach Anspruch 1 oder einem der vorhergehenden Ansprüche, **dadurch gekennzeichnet,** daß die beiden Halbschalen (2, 3) zwei angeformte Halbhülsen (30, 30a) aufweisen, zwischen denen eine Hülle (17a) des Gaszuges (17) über einen Wulstring (32) in einer Ringnut (31) festsetzbar ist.

8. Einrichtung nach Anspruch 1 oder einem der vorhergehenden Ansprüche, **dadurch gekennzeichnet,** daß die Halbschalen (2, 3) einen außerhalb in Längsrichtung des Gehäuses umlaufenden Steg (33) aufweisen, welcher einer Kontur des Bodenbereichs des Fahrzeugaufbaus folgt und einen bündigen Abschluß zu einem Bodenteppich bildet.

## Claims

1. An accelerator-pedal apparatus for a motor vehicle with a pedal plate, pivotably mounted on a pedal mounting in the form of a housing, and an adjustment device connected to the pedal plate, **characterized in that** the pedal mounting comprises an elongate housing which comprises two half shells (2, 3) and in which components of the adjustment device (4) are held on bearing points (5, 6) formed integrally on the inside and catching tabs (9, 10) extending transversely on the outside of the half shells (2, 3) and common centring domes (11, 12) formed integrally on an undersurface (**F**) of the half shells (2, 3) facing the vehicle body are provided for fastening and for fixing the position.

2. An apparatus according to Claim 1, **characterized in that** the components of the adjustment device (4) are arranged mounted beforehand on the bearing points (5, 6) of a half shell (2 or 3) and can be secured by means of the second mounted half shell (2 or 3), wherein the half shells (2, 3) are fixed in position by positioning pins (7, 8) and sleeves (7a, 8a) corresponding thereto.

3. An apparatus according to Claim 1 or 2, **characterized in that** the accelerator pedal (21) is held pivotably in bearing lugs (23, 24) - provided on each half shell (2, 3) outside the housing - by way of pins (22) formed integrally at the side.

4. An apparatus according to Claim 1, 2 or 3, **characterized in that** the assembled half shells (2, 3) form chambers (25, 26 and 27), wherein a transmission member, cooperating directly with the pedal (21) by way of a thrust rod (18) and comprising a deflecting lever (13) and an optionally used entrainment disc (14), is held on the bearing point (5) in a middle chamber (26) between end chambers (25 and 27).

5. An apparatus according to Claim 1 or one of the preceding Claims, **characterized in** that a kick-down switch (**K**) is arranged between receiving means in one upper end chamber (25), and a deflecting pulley (16) for a suspended throttle cable (17) is arranged on the further bearing point (6) in the further lower end chamber (27).

6. An apparatus according to Claim 1 or one of the preceding Claims, **characterized in, that** the chambers (25 to 27) are partially separated from one another by way of transverse walls (28, 29) reinforcing the housing, and apertures for a cable line (34) of a cruise-control device and for a pull rod (15) connecting the components (13 and 16) are provided in the transverse walls.

7. An apparatus according to Claim 1 or one of the preceding Claims, **characterized in that** the two half shells (2, 3) have two integrally formed half shells (30, 30a), between which a sheathing (17a) of the throttle cable (17) can be secured in an annular groove (31) by way of a bead ring (32).

8. An apparatus according to Claim 1 or one of the preceding Claims, **characterized in that** the half shells (2, 3) have a flange (33) extending on the outside in the longitudinal direction of the housing and following a contour of the base area of the vehicle body and forming a flush termination for a floor carpet.

## Revendications

1. Dispositif à pédale d'accélérateur pour un véhicule automobile avec une plaque de pédale montée pivotante sur une fixation de pédale, sous la forme d'un boîtier, et un dispositif de réglage, relié à la plaque de pédale, caractérisé en ce que la fixation de pédale est constituée d'un boîtier allongé, comprenant deux demi-coques (2, 3), dans lequel sont maintenus, sur des points de palier (5, 6), formés sur le côté intérieur, des composants du dispositif de réglage (4) et sur le côté extérieur des demi-coques (2, 3) sont prévues, pour la fixation et l'immobilisation, des baguettes de crochets d'encliquetage (9, 10) s'étendant transversalement ainsi que des dômes de centrage (11, 12) communs, formés sur une surface inférieure (F), dirigée vers la carrosserie du véhicule, des demi-coques (2, 3).

2. Dispositif selon la revendication 1, caractérisé en ce que les composants du dispositif de réglage (4) sont prémontés sur les points de palier (5, 6) d'une demi-coque (2 ou 3) et peuvent être fixés au moyen de la deuxième demi-coque (2 ou 3) placée dessus, les demi-coques (2, 3) étant immobilisées par des tiges de positionnement (7, 8) et des douilles (7a, 8a) correspondant à ceux-ci.

3. Dispositif selon les revendications 1 ou 2, caractérisé en ce que la pédale d'accélérateur (21) est maintenue pivotante par des axes (22) formés sur le côté dans des oeillets de palier (23, 24), prévus à l'extérieur du boîtier, sur chaque demi-coque (2, 3).

4. Dispositif selon les revendications 1, 2 ou 3, caractérisé en ce que les demi-coques (2, 3) assemblées forment des chambres (25, 26 et 27), un élément de transmission, constitué d'un levier de renvoi (13) et d'un disque d'entraîneur (14), utilisé au choix, coopérant directement par une tige de pression (18), avec la pédale (21), étant maintenu sur le point de palier (5), entre des chambres terminales (25 et 26), dans une chambre centrale (26).

5. Dispositif selon la revendication 1 ou l'une des revendications précédentes, caractérisé en ce que dans une chambre supérieure (25) terminale est placé un interrupteur "kick-down" (K) entre des logements, et dans l'autre chambre inférieure (27) terminale, un disque de renvoi (16) est placé sur l'autre point de palier (6), pour un câble d'accélérateur (17) accroché.

6. Dispositif selon la revendication 1 ou l'une des revendications précédentes caractérisé en ce que les chambres (25 à 27) sont partiellement séparées l'une de l'autre par des cloisons transversales (28, 29) renforçant le boîtier, et dans les cloisons transversales sont prévus des ajours pour un câble de traction (34) d'un dispositif Tempomat et pour une tige de traction (15) reliant les composants (13 et 16).

7. Dispositif selon la revendication 1 ou l'une des revendications précédentes caractérisé en ce que les deux demi-coques (2, 3) présentent deux demi-douilles (30, 30a) formées d'un seul tenant, entre lesquelles une enveloppe (17a) du câble d'accélérateur (17) peut être fixée dans une rainure annulaire (31), par un anneau en bourrelet (32).

8. Dispositif selon la revendication 1 ou l'une des revendications précédentes caractérisé en ce que les demi-coques (2, 3) présentent une nervure (33) continue, s'étendant à l'extérieur dans la direction longitudinale du boîtier, qui suit un contour de la zone du plancher de la carrosserie du véhicule et forme une fermeture à fleur d'un tapis de plancher.
